# FASCICULE DE BREVET EUROPEEN

(11) **EP 0 701 588 B1**
(45) Date de publication et mention de la délivrance du brevet: **20.08.1997**
(21) Numéro de dépôt: 94917708.3
(22) Date de dépôt: 02.06.1994
(51) Int. Cl.: C08L 5/04, C08J 5/18

(54) **PROCEDE DE FABRICATION D'UN FILM BIODEGRADABLE, HYDROPHOBE ET TRANSPARENT, ET FILM AINSI OBTENU**
VERFAHREN ZUR HERSTELLUNG VON EINEM HYDROPHOBEN DURCHSICHTIGEN UND BIOLOGISCH ABBAUBAREN FILM UND SO ERHALTENER FILM
METHOD OF MANUFACTURE OF A BIODEGRADABLE, HYDROPHOBIC AND TRANSPARENT FILM, AND FILM OBTAINED

(30) Priorité: 04.06.1993 FR 9306963
(43) Date de publication de la demande: 20.03.1996
(73) Titulaire: C.R.E.C.A., F-29000 Quimper (FR)
(72) Inventeur: TROADEC, Jean-René, F-29128 Trégunc (FR)
(74) Mandataire: Le Faou, Daniel
(86) Numéro de dépôt international: FR9400647
(87) Numéro de publication internationale: WO9429382

(56) Documents cités:
- EP-A- 0 048 123
- WO-A-93/12986
- DE-A- 2 737 947
- FR-A- 2 074 885
- GB-A- 492 264
- US-A- 3 307 293
- US-A- 3 533 817

## Description

La présente invention se rapporte à un procédé de fabrication d'un film biodégradable, hydrophobe et transparent.

Elle se rapporte également au film obtenu par un tel procédé.

Dans l'ensemble de la présente demande, on entendra par "hydrophobe", la capacité du film à n'être ni mouillé, ni traversé par l'eau.

Une très grande partie des films utilisés à l'heure actuelle, constituant notamment des emballages, sont formés de matières plastiques synthétiques. Cette tendance découle du faible coût et de la grande malléabilité industrielle de ces matières, ainsi que du nombre varié de formes sous lesquelles elles peuvent être employées.

Parmi celles-ci, le polyéthylène, le polyester et le chlorure de polyvinyle sont les plus fréquemment utilisés.

Les pays industrialisés, en particulier pour des raisons d'ordre écologique, tendent à réduire l'emploi de ces matières plastiques, notamment pour l'emballage. Il est en effet bien connu que ces matériaux présentent une aptitude à se dégrader très faible ou nulle. Ils constituent de ce fait une source de pollution importante.

On a bien entendu proposé de modifier les polymères synthétiques utilisés en tant qu'emballages, par exemple en modifiant leur structure ou en les couplant avec d'autres molécules, pour les rendre sensibles au processus de dégradation naturelle. Toutefois, les matériaux obtenus ne se dégradent que très partiellement, ce qui apparaît insuffisant compte-tenu des énormes quantités d'emballages employés.

La prise de conscience des consommateurs vis-à-vis des problèmes écologiques à provoqué une désaffection de ceux-ci pour les emballages et films en matière plastique au profit de ceux constitués par des produits d'origine naturelle et/ou se dégradant facilement. Malheureusement, ces produits n'offrent pas les mêmes caractéristiques mécaniques et physiques que les matières plastiques. C'est notamment le cas du papier et du carton.

Le document DE-A-2 737 947 se rapporte à un procédé de fabrication d'articles en pullulane en vue d'augmenter leur résistance à l'eau. La technique consiste à réaliser un mélange de pullulane, d'un polyuronide tel qu'un alginate et d'eau, à façonner l'article, puis à revêtir ou plonger l'article façonné dans une solution d'un ion bivalent ou polyvalent tel que l'ion calcium.

Le document US-A-3 533 817 concerne des compositions de collagène natif ou non dénaturé et de caséine qui peuvent être conditionnées sous forme de feuilles consommables ou comme "enveloppes" alimentaires pour des articles tels que des saucisses. Un traitement du matériau sec avec un agent réticulant permet de le rendre plus résistant à l'humidité. Un exemple d'un tel agent est l'acide tannique.

Un objectif de la présente invention est de proposer un procédé de fabrication d'un film qui soit biodégradable mais également parfaitement transparent et hydrophobe, c'est-à-dire insensible à l'humidité susceptible de venir à son contact.

Un tel film peut être utilisé comme matériau d'emballage ou d'operculage tout en étant inerte, au moins à moyen terme, vis-à-vis des produits destinés à venir en contact avec lui, notamment lorsque ceux-ci sont de type alimentaire.

Un autre objectif est de proposer un procédé de fabrication à la fois simple et économique.

Ces objectifs sont atteints, conformément à l'invention, par le fait que ce procédé consiste à mettre en oeuvre les étapes suivantes :
a) réaliser un mélange comprenant notamment un hydrocolloïde, un solvant aqueux et un plastifiant miscible avec l'hydrocolloïde et le solvant ;
b) former un film à partir de ce mélange ;
c) sécher le film ainsi obtenu ;
d) traiter au moins une face du film sec au moyen d'une solution de matière tannante puis au moyen d'une solution d'un composé apte à assurer la gélification de l'hydrocolloïde.

Préférentiellement, l'hydrocolloïde est un alginate, hydrocolloïde sur lequel ont plus particulièrement porté les recherches et les essais de la demanderesse.

La demanderesse a constaté qu'en réalisant un film conformément à ce mode opératoire, celui-ci est non seulement biodégradable mais également hydrophobe et parfaitement transparent.

L'action de la matière tannante peut s'analyser à la fois comme un tannage et un mordançage du film, à savoir :
- un tannage qui permet de coaguler la surface du film d'alginate ;
- un mordançage en attaquant la surface du film pour préparer l'action du composé apte à assurer la gélification de l'alginate.

Selon d'autres caractéristiques avantageuses de ce procédé :
- à l'étape d), on procède au traitement du film par immersion, enduction ou pulvérisation ;
- le solvant consiste en un mélange d'eau et d'un monoalcool aliphatique en C₁ à C₆ ;
- le plastifiant est choisi dans le groupe formé par les polyols, tels que le glycérol, le polyéthylène-glycol et le sorbitol ;
- la matière tannante consiste en un alun, un tanin ou une solution tannante au chrome ;
- l'alun est un alun de potassium ;
- le composé apte à assurer la gélification de l'alginate est choisi dans le groupe formé par:
   . les nitrates de potassium ou de sodium,
   . le carbonate de calcium,
   . les chlorures de calcium, potassium, magnésium ou de zinc,
   . les sulfates de calcium, potassium, magnésium ou de zinc ;
- le mélange de l'étape a) comprend (% en poids) :
   . 2 à 6 % d'alginate ;
   . 10 à 50 % de plastifiant, exprimé par rapport à la quantité d'alginate ;
- à l'issue de l'étape a), on procède à la déshydratation du mélange puis à sa réhydratation avec une quantité de solvant inférieure à la quantité de départ ;
- la déshydratation est mise en oeuvre par lyophilisation du mélange ;
- le séchage du film est mis en oeuvre par passage de celui-ci sur une série de rouleaux chauffants rotatifs puis traitement aux micro-ondes ;
- le traitement aux micro-ondes est opéré par passage du film sous plusieurs modules de puissance avantageusement réglable ;
- le mélange de l'étape a) comprend des additifs tels que des anti-oxydants, anti-UV, conservateurs et colorants.

L'invention concerne également le film obtenu par la mise en oeuvre de ce procédé.

D'autres caractéristiques et avantages de l'invention apparaîtront à la lecture de la description détaillée qui va suivre, faite en référence aux dessins annexés dans lesquels :
- la figure 1 est une vue simplifiée en perspective d'une partie d'une installation de fabrication d'un film selon le procédé conforme à l'invention ;
- la figure 2 est un schéma montrant la totalité de cette installation, vue de côté.

Dans l'ensemble de la présente demande, on entendra par "plastifiant", un matériau propre à diminuer les interactions macromoléculaires de l'alginate - ou autre hydrocolloïde - , en s'insérant entre les chaînes de celui-ci. Ce plastifiant a pour but, lorsque le film est réalisé, de le rendre plus plastique et, par suite, plus moulable et déformable.

Par ailleurs, on entendra par l'expression "composé apte à assurer la gélification de l'hydrocolloïde", un composé qui permet de générer au sein de l'hydrocolloïde des zones fortement structurées et réticulées, du type boîte à oeufs ("egg box model").

Des hydrocolloïdes utilisables dans le cadre de l'invention sont, entre autres, des hydrocolloïdes, et en particulier des alginates, d'origine algale. De préférence, les algues sont choisies parmi les familles constituées par le chlorophycées, les rhodophycées et les phéophycées. On peut utiliser aussi bien des algues marines que des algues d'eau douce. Les algues de culture, de dérive ou d'échouage conviennent également.

D'autres alginates peuvent cependant être utilisés dans le cadre de l'invention, par exemple des alginates de synthèse.

De préférence, l'alginate se présente sous sa forme sodique ou d'un sel d'un autre métal alcalin ou alcalino-terreux.

Le solvant a bien entendu pour but de permettre la mise en solution de l'hydrocolloïde. Il s'agit d'un solvant aqueux.

De préférence, ce solvant est constitué par un mélange d'eau et d'un monoalcool aliphatique, notamment l'éthanol.

Le plastifiant miscible avec le solvant et l'alginate est choisi de préférence dans le groupe formé par les polyols, tels que le glycérol, le polyéthylène-glycol, le sorbitol.

Son rôle est de moduler les caractéristiques de cohésion du film en affaiblissant les interactions macromoléculaires au sein de l'alginate, c'est-à-dire en s'insérant dans les chaînes qui le constituent.

Le plastifiant doit posséder une bonne compatibilité avec le couple hydrocolloïde/solvant afin d'éviter une séparation de phase lors du séchage du film. Il convient donc d'utiliser un plastifiant hydrophile pour plastifier ce film à base d'un polymère hydrophile. Les polyols et plus particulièrement le glycérol et le sorbitol sont particulièrement utilisés dans la formulation de films à base d'hydrocolloïdes en raison de leur double compatibilité aux solvants aqueux utilisés et aux polysaccharides.

L'ajout de plastifiant a donc pour effet de diminuer la cohésion et la force du réseau et donc de rendre le film plus flexible, étirable et moins cassant.

La présence de plastifiant augmente par contre la perméabilité du film au transfert de vapeur d'eau et des gaz en général car il confère une plus grande mobilité aux molécules de gaz dans le film.

Le traitement d'un film d'alginate avec une matière tannante est déjà connu en soi pour rendre le film insoluble dans l'eau.

Par ailleurs, comme déjà dit plus haut, le composé apte à assurer la gélification de l'alginate permet de générer au sein de l'alginate des zones fortement structurées et réticulées qui rendent également l'alginate insoluble dans l'eau.

Or, en soumettant, conformément à l'invention, un film sec à base d'alginate, à une solution de manière tannante puis à une solution d'un composé assurant la gélification de l'alginate, il s'opère une synergie entre ces deux traitements qui se traduit non seulement par le fait que le film est insoluble dans l'eau mais aussi par le fait qu'il devient hydrophobe. En d'autres termes, au contact de l'eau, son aspect et son poids demeurent inchangés.

Le traitement d'une seule des deux faces films au moyen des composés ci-dessus peut avoir de l'intérêt, en particulier dans la situation suivante.

Il est bien connu que les produits alimentaires surgelés sont parfois soumis à certaines variations de température qui se traduisent par l'apparition de micro-cristaux de glace sur la surface du produit. Ce phénomène, appelé "effet de neige" est désavantageux, en particulier, sur les plans visuel et gustatif.

Si ce produit alimentaire est emballé dans un sac formé d'un film conforme à l'invention, face hydrophobe tournée vers l'extérieur, les micro-cristaux pourront être absorbés par la face intérieure non soumise à ce traitement, de sorte quel'"effet de neige" sera atténué, voire supprimé.

Ces caractéristiques seront mises en évidence dans la suite de la description.

### Exemple 1 : Elaboration de mélanges à base d'alginate.

On procède au mélange, avec un agitateur rotatif à hélices, un mélangeur ou un centrifugeur de type connu les composés suivants : 810 ml d'eau, 150 ml d'éthanol, 25 g d'alginate (sous forme sodique) et 15 g de glycérol.

Ce mélange M₁ est mis sous forme de film par laminage sur une plaque de verre de 30 cm de côté.

On laisse sécher 12 heures à 60°C et l'on obtient un film F₁.

De la même manière que précédemment, on mélange 940 ml d'eau, 40 g d'alginate (sous forme calcique) et 20 g de glycérol.

Après mise sous forme de film de ce mélange M₂, on laisse sécher 12 heures à 60°C et on obtient un film F₂.

### Exemple 2 : Comportement des films dans l'eau

Des échantillons de 1,5 g sont prélevés sur chacun des films F₁ et F₂.

On donne dans le tableau ci-dessous la nature des traitements que ces films F₁ et F₂ ont subi ainsi que leurs caractéristiques et comportement après un séjour de 2 heures dans de l'eau distillée.

Les termes utilisés dans ce tableau ont la signification suivante :
- CaCl₂ = solution de chlorure de calcium.
- alun = solution d'alun de potassium (Al₂(SO₄)₃, K₂SO₄, 24H₂O).

Les traitements des films avec ces deux produits ont été faits par trempage dans les solutions correspondantes pendant une durée compnse entre 30 secondes et une minute (réticulation rapide).

La durée du contact du film avec les solutions de CaCl₂ et d'alun n'est pas critique. Elle peut varier de quelques secondes à quelques minutes.

L'expression "CaCl₂ avant séchage" signifie que l'on a traité le film F₁ ou F₂ avant de procéder à son séchage de 12 heures à 60°C, c'est-à-dire qu'on a traité un film encore humide.

Les données figurant dans le tableau suivant traduisent les résultats obtenus sur une série d'essais menés avec des concentrations en CaCl₂ et en alun de 5, 10, 15 et 20 % en poids.

| FILM | NATURE DU TRAITEMENT | VARIATION DE POIDS | ASPECT FINAL DU FILM |
|---|---|---|---|
| F₁ | aucun | dilution dans l'eau en 30 s. | |
| F₂ | aucun | dilution dans l'eau en 30 s. | |
| F₁ | CaCl₂ avant séchage | + 11,5 g | gonfle |
| | | | transparent |
| F₂ | CaCl₂ avant séchage | + 50,5 g | gonfle |
| | | | transparent |
| F₁ | CaCl₂ avant séchage | 0 | translucide |
| | alun en trempage | | |
| F₂ | CaCl₂ avant séchage | 0 | translucide |
| | alun en trempage | | |
| F₁ | alun en trempage | 0 | translucide |
| | | | casse très facilement |
| F₂ | alun en trempage | 0 | translucide |
| | | | casse très facilement |
| F₁ | CaCl₂ en trempage | 0 | translucide |
| | | | casse très facilement |
| F₂ | CaCl₂ en trempage | 0 | translucide |
| | | | casse très facilement |
| F₁ | CaCl₂ en trempage puis alun en trempage | 0 | opaque |
| F₂ | CaCl₂ en trempage puis alun en trempage | 0 | translucide |
| F₁ | alun en trempage puis CaCl₂ en trempage | 0 | transparent |
| | | | hydrophobe |
| F₂ | alun en trempage puis CaCl₂ en trempage | 0 | transparent |
| | | | hydrophobe |
| F₁ | alun avant séchage | + 13,5 g | gonfle |
| | | | opaque |
| F₂ | alun avant séchage | + 26,5 g | gonfle |
| | | | opaque |
| F₁ | alun avant séchage | 0 | formation de bulles |
| | CaCl₂ en trempage | | |
| F₂ | alun avant séchage | 0 | formation de bulles |
| | CaCl₂ en trempage | | |
| F₂ | mélange alun + CaCl₂ en trempage | 0 | formation de bulles |

Ces résultats montrent que seul un traitement sur film sec au moyen d'alun puis de chlorure de calcium permet d'obtenir un film transparent et hydrophobe.

On notera que dans les exemples précédents, on a laissé sécher les films 12 heures à 60°C avant de les traiter à l'alun de potassium et au chlorure de calcium.

Il est bien entendu possible d'avoir recours à d'autres méthodes et techniques de séchage, notamment dans l'optique d'une production industrielle du film.

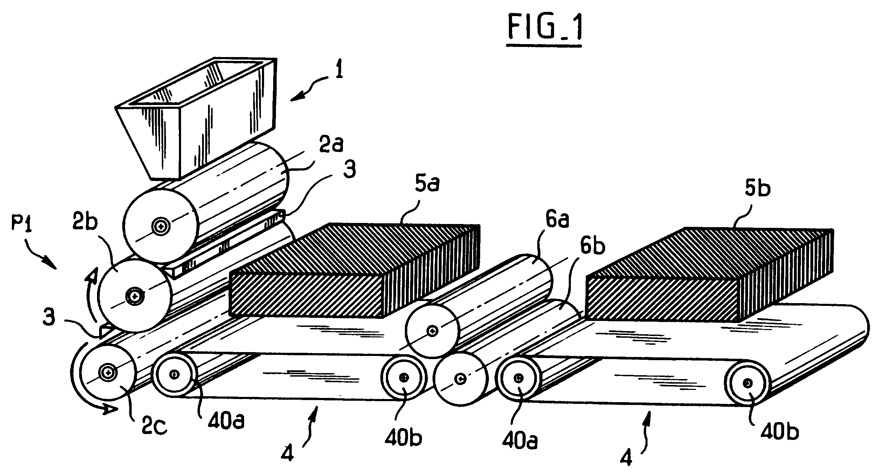

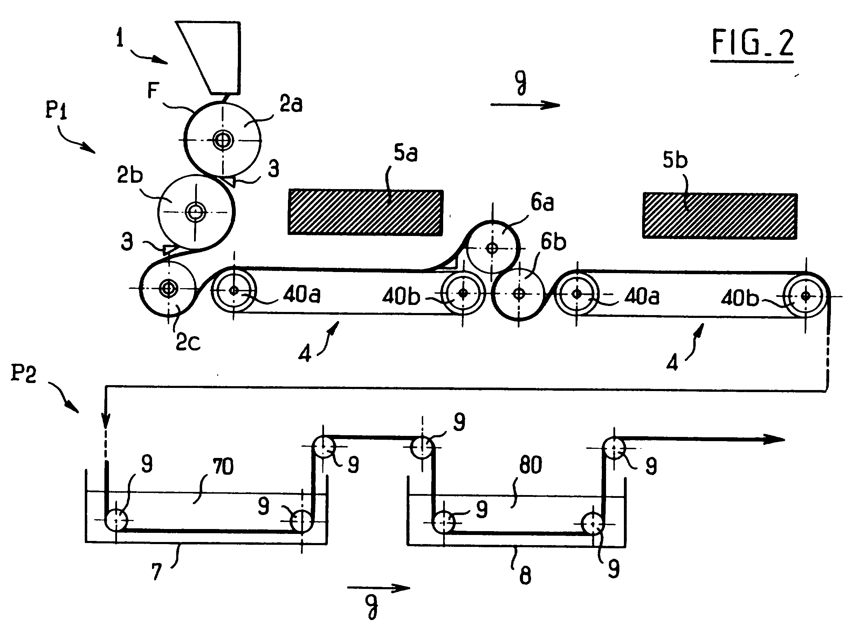

Les figures 1 et 2 annexées représentent schématiquement une installation de fabrication de film qui inclut à la fois des moyens de séchage et des moyens de traitement avec les deux produits précités.

La partie "poste de séchage" de cette installation est visible sur la figure 1 et la partie supérieure de la figure 2, tandis que la partie inférieure de cette seconde figure montre le poste de traitement à l'alun de potassium et au chlorure de calcium.

Le poste de séchage P₁ comporte une trémie 1 de stockage et de distribution de type connu du mélange destiné à former le film. Son extrémité inférieure ouverte se situe à l'aplomb d'une série de trois cylindres rotatifs chauffants, 2a, 2b, 2c, dont les sens de rotation sont opposés deux à deux.

Le fond de la trémie présente une fente de sortie du mélange, parallèle aux génératrices des cylindres et dont la largeur, de préférence, est réglable ; le mélange s'écoule sous forme de couche, par gravité, à travers cette fente, sur le cylindre supérieur 2a dont la vitesse est choisie pour s'accorder à la vitesse d'écoulement. C'est donc un film de matière qui vient se former sur le cylindre 2a, pour être transféré ensuite aux cylindres suivants.

Des racleurs à brosses 3 régulent l'épaisseur et favorisent le transfert du film au cylindre suivant.

A proximité du cylindre inférieur 2c est disposé un convoyeur à bande sans fin 4 dont les rouleaux d'entraînement sont désignés 40a et 40b. Ils transportent le film quittant le cylindre 2c.

Entre ce convoyeur et un second du même type, également référencé 4, sont prévus des cylindres de transfert rotatifs 6a, 6b.

Les bandes des convoyeurs 4 sont avantageusement en P.T.F.E. (polytétrafluoréthylène) carboné.

Au-dessus du brin supérieur des deux convoyeurs 4 sont prévus des générateurs de micro-ondes 5a, 5b à fentes rayonnantes, dirigées vers ces convoyeurs. On expliquera ci-après leur fonction.

En aval des convoyeurs (partie inférieure de la figure 2) est prévu le poste de traitement P₂ qui comporte deux bacs 7 et 8 contenant respectivement une solution 70 d'alun de potassium et une solution 80 de chlorure de calcium. Ces bacs sont chacun pourvus de rouleaux de renvoi rotatifs 9.

On notera que les moyens d'entraînement des rouleaux et cylindres de cette installation, de préférence à vitesse variable, n'ont pas été représentés afin de ne pas alourdir inutilement les figures. Il s'agit par exemple de moteurs électriques de type connu.

A la figure 2, on a désigné par la flèche **g** le sens d'avancement du film **F.**

Le passage du film sur les cylindres 2a, 2b, 2c a pour but de débarrasser en partie ce dernier de l'eau qu'il contient. Cette élimination partielle de l'eau se fait essentiellement en surface, par contact successifs des deux faces du film sur les cylindres 2a, 2b et 2c. La température et la vitesse de rotation de ces cylindres sont choisis pour permettre d'évaporer environ 60 % de l'eau sans créer dans le film des bulles (micro-particules d'eau) néfastes à la transparence et qualité d'aspect, et qui apparaîtraient en cas d'élimination trop brutale de cette eau.

Le passage sous les deux générateurs successifs de micro-ondes 5a, 5b permet d'éliminer l'eau située en profondeur dans le film. Là encore, la puissance de ces générateurs devra être déterminée de manière à provoquer une élimination en douceur de cette eau, sans créer de bullage à l'intérieur du film. Si nécessaire, il tout à fait possible de faire passer le film sous un nombre plus important de générateurs, chacun étant d'une puissance faible, et décroissante d'amont en aval si on souhaite obtenir un film souple en limitant la sublimation de l'eau emprisonnée au sein du film.

A la sortie des générateurs, le film **F** est déplacé par l'intermédiaire des rouleaux 9 dans les bacs 7 et 8. Dans une variante de réalisation, ces bacs pourraient être remplacés par des moyens d'aspersion ou d'enduction d'une ou des deux faces du film par les solutions correspondantes.

On trouvera ci-après les conditions opératoires qui permettent d'obtenir un film parfaitement transparent et exempt de bulles.

Dans une cuve de 100 litres, on prépare 80 kilogrammes de solution filmogène, à partir des composants suivants :
- eau + éthanol = 76,8 l
- alginate = 2 kg
- glycérol = 1,2 kg

Pour obtenir le mélange, on verse dans un volume de 64,8 litres d'eau déminéralisée 12 litres d'éthanol ayant une concentration de 99‰. On chauffe à 40°C et on y incorpore 2 kilogrammes d'alginate de sodium et 1,2 kilogramme de glycérol, en malaxant l'ensemble.

On obtient ainsi une masse de 80 kilogrammes de gomme alginique, que l'on introduit dans la trémie 1. La buse (ou fente) de sortie de celle-ci a une longueur de 300 mm - correspondant à la largeur de la laize à produire -, et sa largeur - correspondant à l'épaisseur de la laize - est réglée à 2,5 mm.

On procède aux réglages des vitesses de défilement et des températures de "cristallisation" en fonction des propriétés spécifiques recherchées.

Le mélange filmogène déposé sur le cylindre supérieur 2a a donc une épaisseur de 2,5 mm.

Ce cylindre se trouve par exemple à une température de 40°C. Avantageusement, est prévue une diffusion d'air pulsé chaud, à 30°C, sur ce cylindre 2a, ce qui réalise un croûtage superficiel.

Les cylindres 2b et 2c sont respectivement à la température de 45°C et de 30°C.

Le temps de défilement du film entre les cylindres 2a et 2c est de 1 minute.

Avantageusement, des racloirs à brosses régulent l'uniformité d'épaisseur du film.

C'est un film "cristallisé", c'est-à-dire solidifié sur les deux faces (interne et externe) qui est repris par le convoyeur 4.

Lors du passage du film sous les générateurs de micro-ondes 5a, 5b à fenêtres rayonnantes, il se produit une évaporation de l'eau libre emprisonnée dans le film, et un séchage à coeur sans évaporation excessive. Chaque générateur 5a, 5b possède une puissance de 2 x 400 watts. Plus de deux générateurs successifs pourraient du reste être mis en oeuvre.

Le temps total de défilement du film sous les générateurs 5a, 5b est de l'ordre de 4 minutes.

La bande filmogène est ensuite traitée au poste P₂ où s'opèrent, par trempage dans les bacs successifs 7, 8 les traitements aux solutions liquides d'alun de potassium et de chlorure de calcium, ce qui réalise le tannage et la gélification du film.

A la sortie du bac 8, on peut prévoir un poste de séchage final du film traité.

Le film obtenu est par exemple mis sous forme de bobine ou utilisé pour confectionner un film multicouches par collage à chaud, selon des techniques connues de l'homme du métier.

Afin de réduire la durée de séchage du film, il est possible de procéder à la déshydratation du mélange de départ, puis de le réhydrater avec une teneur moins élevée d'eau.

L'intérêt d'un tel processus est de raccourcir la durée de séchage final du film. La déshydratation va débarrasser le mélange de son solvant "libre", c'est-à-dire celui qui n'est pas associé aux molécules d'hydrocolloïdes. Il suffit alors de réhydrater le mélange avec du solvant, dans une proportion de 20 à 30 % en poids du mélange, pour pouvoir réaliser un film.Le film est alors confectionné comme précédemment puis séché et traité par exemple comme mentionné en référence aux figures 1 et 2.

La déshydratation du mélange peut être opérée par toute technique connue de l'homme du métier. Une solution intéressante est la déshydratation par lyophilisation.

Pour l'ensemble des exemples ci-après, les films utilisés ont été traités avec une solution d'alun de potassium à 10 % en poids et une solution de CaCl₂ à 10 % en poids.

### Exemple 3 : Mesure de perméabilité à la vapeur d'eau et à l'oxygène.

Des mesures de perméabilité d'un film F'₁ de 100 µm d'épaisseur ont été effectuées. Elles ont donné les résultats suivants :
- perméabilité à la vapeur d'eau à 24°C (sous 760 mm Hg) = 1,44 g / m² / mm d'épaisseur / heure ;
- perméabilité à la vapeur d'eau à 38,5°C (sous 760 mm Hg) = 1,18 g / m² / mm d'épaisseur / heure ;
- perméabilité à l'oxygène = 45 cm³ / m² / mm d'épaisseur / heure.

Ces mesures ont été faites par des méthodes usuelles: gravimétrie pour la vapeur d'eau et chromatographie en phase gazeuse pour l'oxygène.

### Exemple 4 : Comportement du film en contact avec différents agents chimiques.

L'étude du comportement d'un film F'₁, d'épaisseur 100 µm, traité à l'alun et au chlorure de calcium, obtenu à partir du mélange M1, en contact avec différents agents chimiques a été faite.

Les résultats apparaissent dans les tableaux suivants.

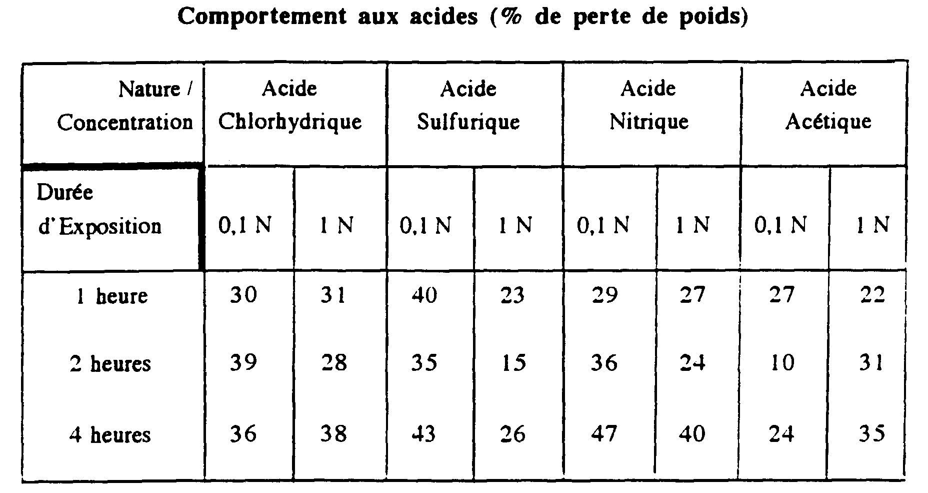

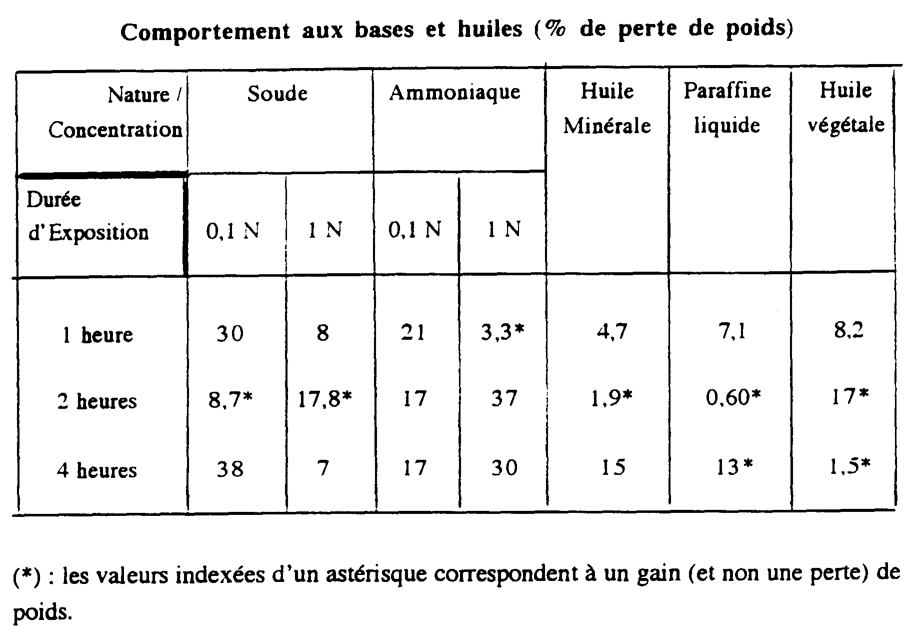

Bien que ces résultats soient sans commune mesure avec ceux obtenus avec des films formés de polymères synthétiques, le film de l'invention, en contact avec ces produits, garde sa cohésion, c'est-à-dire qu'il ne se dégrade pas, contrairement à des films réalisés avec d'autres polymères naturels.

### Exemple 5 : Test de biodégradabilité

On procède à un essai de biodégradabilité sur une feuille de film F'₁ obtenue par thermoformage, de 400 micromètres d'épaisseur et d'une surface de 40 cm².

Pour ce faire, on dépose dans un tube plastique microperforé divers matériaux correspondants aux différentes couches de terrain abritant une décharge d'enfouissement d'ordures ménagères.

Les conditions opératoires sont les suivantes :
- diamètre du tube = 100 mm,
- hauteur du tube = 300 mm,
- nature des matériaux et épaisseur, en commençant par le fond de tube :
   . gravillons = 30 mm,
   . sable de mines = 37,5 mm,
   . glaise = 22,5 mm,
   . terre de fond = 67,5 mm,
   . broyat d'ordures ménagères = 67,5 mm,
   . couverture de remblai = 45 mm,
   . terre arable = 30 mm.

Le film est dispersé au sein du broyat d'ordures ménagères sous la forme de 40 fragment de 1 cm².

Après 6 mois d'enfouissement, il a été récupéré seulement 17 fragments dont l'aire est comprise entre 0,8 cm² et 0,07 cm².

Ce test montre le caractère hautement biodégradable du film obtenu conformément au procédé de l'invention.

### Exemple 6 : Test d'incinération

On réalise la combustion de 100 g d'un film F'₁ jusqu'à l'obtention d'un poids constant de cendres.

Le poids résiduel de cendre est alors de 0,6 g, celles-ci ne présentant aucune trace de déchets polluants.

Il est bien entendu possible d'incorporer dans le film obtenu conformément à l'invention, des additifs tels que des anti-oxydants, des anti-UV, des conservateurs et des colorants.

En fonction de l'épaisseur des films réalisés, ceux-ci pourront être utilisé notamment comme matériau d'operculage (film de faible épaisseur) ou d'emballage (film de plus grande épaisseur).

## Revendications

1. Procédé de fabrication d'un film biodégradable, hydrophobe et transparent, caractérisé en ce qu'il consiste à mettre en oeuvre les étapes suivantes :
a) réaliser un mélange comprenant notamment un hydrocolloïde, un solvant aqueux et un plastifiant miscible avec l'hydrocolloïde et le solvant ;
b) former un film à partir de ce mélange ;
c) sécher le film ainsi obtenu ;
d) traiter au moins une face du film sec au moyen d'une solution de matière tannante puis au moyen d'une solution d'un composé apte à assurer la gélification de l'hydrocolloïde.

2. Procédé selon la revendication 1, caractérisé par le fait que l'hydrocolloïde est un alginate.

3. Procédé selon la revendication 2, caractérisé en ce que, à l'étape d), on procède au traitement du film par immersion, enduction ou pulvérisation.

4. Procédé selon la revendication 2 ou 3, caractérisé en ce que ledit solvant consiste en un mélange d'eau et d'un monoalcool aliphatique en C₁ à C₆.

5. Procédé selon la revendication 2 à 4, caractérisé en ce que le plastifiant est choisi dans le groupe formé par les polyols, tels que le glycérol, le polyéthylène-glycol et le sorbitol.

6. Procédé selon l'une des revendications 2 à 5, caractérisé en ce que la matière tannante consiste en un alun, un tanin ou une solution tannante au chrome.

7. Procédé selon la revendication 6, caractérisé en ce que l'alun est un alun de Potassium.

8. Procédé selon l'une des revendications 2 à 7, caractérisé en ce que ledit composé apte à assurer la gélification de l'alginate est choisi dans le groupe formé par :
. les nitrates de potassium ou de sodium,
. le carbonate de calcium,
. les chlorures de calcium, potassium, magnésium ou de zinc,
. les sulfates de calcium, potassium, magnésium ou de zinc ;

9. Procédé selon l'une des revendications 1 à 8, caractérisé en ce que le mélange de l'étape a) comprend (% en poids) :
. 2 à 6% d'alginate ;
. 10 à 50 % de plastifiant, exprimé par rapport à la quantité d'alginate ;
. le reste étant formé par le solvant.

10. Procédé selon l'une des revendications 2 à 9, caractérisé en ce que, à l'issue de l'étape a), on procède à la déshydratation du mélange puis à sa réhydratation avec une quantité de solvant inférieure à la quantité de départ.

11. Procédé selon la revendication 10, caractérisé en ce que la déshydratation est mise en oeuvre par lyophilisation du mélange.

12. Procédé selon l'une des revendications 1 à 11, caractérisé en ce que le séchage du film est mis en oeuvre par passage de celui-ci sur une série de rouleaux chauffants rotatifs puis traitement aux micro-ondes.

13. Procédé selon la revendication 12, caractérisé en ce que le traitement aux micro-ondes est opéré par passage du film sous plusieurs modules.

14. Procédé selon l'une des revendications 1 à 13, caractérisé en ce que le mélange de l'étape a) comprend des additifs tels que des anti-oxydants, anti-UV, conservateurs et colorants.

15. Film obtenu par la mise en oeuvre du procédé selon l'une des revendications 1 à 14.

## Patentansprüche

1. Verfahren zur Herstellung von einem hydrophoben durchsichtigen und biologisch abbaubaren Film,
**dadurch gekennzeichnet, daß** es folgende Verfahrensschritte umfaßt:
a) Anfertigung eines Gemisches, welches insbesondere ein Hydrokolloid, einen wasserlöslichen Verdünner und einen Weichmacher enthält, welcher mit dem Hydrokolloid und dem Verdünner vermischbar ist;
b) Herstellung eines Films aus diesem Gemisch;
c) Trocknung des so hergestellten Films;
d) Behandlung von mindestens einer Fläche des getrockneten Films mit Hilfe eines Tannatmaterials und anschließend mit einer Lösung einer Verbindung, welche geeignet ist, die Gelierung des Hydrokolloids zu bewirken.

2. Verfahren nach Anspruch 1,
**dadurch gekennzeichnet, daß** das Hydrokolloid ein Alginat ist.

3. Verfahren nach Anspruch 2,
**dadurch gekennzeichnet, daß** im Verfahrensschritt d) der Film durch Eintauchen, Induktion oder Aufstäuben behandelt wird.

4. Verfahren nach einem der Ansprüche 2 oder 3,
**dadurch gekennzeichnet, daß** der Verdünner aus einem Gemisch aus Wasser und einem alphatischen einwertigen C₁ - C₆-Alkohol besteht.

5. Verfahren nach einem der Ansprüche 2 bis 4,
**dadurch gekennzeichnet, daß** der Weichmacher aus der Gruppe von Polyolen ausgewählt wird, welche Glyzerol, Polyethylenglykol und Sorbit umfaßt.

6. Verfahren nach einem der Ansprüche 2 bis 5,
**dadurch gekennzeichnet, daß** das tannierende Material aus einem Alaun, einem Tannin oder einer tannierenden Chromlösung besteht.

7. Verfahren nach Anspruch 6,
**dadurch gekennzeichnet, daß** das Alaun ein Kaliumalaun ist.

8. Verfahren nach einem der Ansprüche 2 bis 7,
**dadurch gekennzeichnet, daß** die Verbindung für die Gelierung des Alginats aus der Gruppe ausgewählt wird, welche folgendes umfaßt:
. Kaliumnitrate oder Natriumnitrate,
. Kalziumkarbonat,
. Kalziumchlorid, Kaliumchlorid, Magnesiumchlorid oder Zinkchlorid,
. Kalsiumsulfat, Kaliumsulfat, Magnesiumsulfat oder Zinksulfat.

9. Verfahren nach einem der Ansprüche 1 bis 8,
**dadurch gekennzeichnet, daß** das Gemisch aus dem Verfahrensschritt a) folgendes enthält (in Gew.-%):
. 2 bis 6 % Alginat
. 10 bis 50 % Weichmacher bezogen auf die Alginatmenge;
. der Rest besteht aus dem Verdünner.

10. Verfahren nach einem der Ansprüche 2 bis 9,
**dadurch gekennzeichnet, daß** im Anschluß an den Verfahrensschritt a) das Gemisch dehydriert und danach wieder mit einer Menge eines Verdünners rehydriert wird, die unter der Ausgangsmenge liegt.

11. Verfahren nach Anspruch 10,
**dadurch gekennzeichnet, daß** die Dehydration durch Lyophilisation des Gemisches durchgeführt wird.

12. Verfahren nach einem der Ansprüche 1 bis 11,
**dadurch gekennzeichnet, daß** die Trocknung des Films dadurch erreicht wird, daß er durch eine Reihe von heizbaren rotierenden Walzen geleitet und dann mit Mikrowellen behandelt wird.

13. Verfahren nach Anspruch 12,
**dadurch gekennzeichnet, daß** die Behandlung mit Mikrowellen dadurch erfolgt, daß der Film unter mehreren Modulen durchgeleitet wird.

14. Verfahren nach einem der Ansprüche 1 bis 13,
**dadurch gekennzeichnet, daß** das Gemisch aus dem Verfahrensschritt a) verschiedene Additive, wie Oxidationsinhibitoren, UV-Inhibitoren, Konservierungsmittel und Farbstoffe enthält.

15. Herstellung eines Films nach dem Verfahren der Ansprüche 1 bis 14.

## Claims

1. Process for the manufacture of a biodegradable, hydrophobic and transparent film, characterized in that it consists in carrying out the following stages:
a) producing a mixture including in particular a hydrocolloid, an aqueous solvent and a plasticizer which is miscible with the hydrocolloid and the solvent;
b) forming a film from this mixture;
c) drying the film thus obtained;
d) treating at least one face of the dry film with a solution of tanning material and then with a solution of a compound capable of ensuring the gelling of the hydrocolloid.

2. Process according to Claim 1, characterized in that the hydrocolloid is an alginate.

3. Process according to Claim 2, characterized in that, in stage d), the treatment of the film is performed by immersion, coating or spraying.

4. Process according to Claim 2 or 3, characterized in that said solvent consists of a mixture of water and of a C₁-C₆ aliphatic monoalcohol.

5. Process according to Claim 2 to 4, characterized in that the plasticizer is chosen from the group made up of polyols such as glycerol, polyethylene glycol and sorbitol.

6. Process according to one of Claims 2 to 5, characterized in that the tanning material consists of an alum, a tannin or a chrome tanning solution.

7. Process according to Claim 6, characterized in that the alum is a Potassium alum.

8. Process according to one of Claims 2 to 7, characterized in that said compound capable of ensuring the gelling of the alginate is chosen from the group made up of:
potassium or sodium nitrates,
calcium carbonate,
calcium, potassium, magnesium or zinc chlorides,
calcium, potassium, magnesium or zinc sulfates;

9. Process according to one of Claims 1 to 8, characterized in that the mixture from stage a) includes (% by weight):
2 to 6 % of alginate;
10 to 50 % of plasticizer, expressed in relation to the quantity of alginate;
the remainder being made up of the solvent.

10. Process according to one of Claims 2 to 9, characterized in that, at the end of stage a) the mixture is dehydrated and then rehydrated with a quantity of solvent which is smaller than the initial quantity.

11. Process according to Claim 10, characterized in that the dehydration is carried out by freeze-drying the mixture.

12. Process according to one of Claims 1 to 11, characterized in that the drying of the film is carried out by passing the latter over a series of rotary heating rollers, followed by treatment with microwaves.

13. Process according to Claim 12, characterized in that the treatment with microwaves is performed by passing the film under a number of modules.

14. Process according to one of Claims 1 to 13, characterized in that the mixture from stage a) additionally includes additives such as antioxidants, anti-UV additives, stabilizers and colorants.

15. Film obtained by carrying out the process according to one of Claims 1 to 14.
